# EUROPEAN PATENT APPLICATION

(11) **EP 4 838 842 A1**
(43) Date of publication of application: **11.11.2026**
(21) Application number: 25752412.4
(22) Date of filing: 16.01.2025
(51) Int. Cl.: H04L 25/03, H04L 25/02, H04B 17/336, G06N 3/09, G06N 20/00, H04B 7/0413

(54) **APPARATUS AND METHOD FOR ELIMINATING INTERFERENCE FROM RECEIVER BASED ON MACHINE LEARNING**

(30) Priority: 08.02.2024 KR 20240019539; 05.03.2024 KR 20240031341
(71) Applicant: Samsung Electronics Co., Ltd., Suwon-si, Gyeonggi-do 16677 (KR)
(72) Inventor: SEO, Juhwan, Suwon-si Gyeonggi-do 16677 (KR); KIM, Kyeongyeon, Suwon-si Gyeonggi-do 16677 (KR); YANG, Hayoung, Suwon-si Gyeonggi-do 16677 (KR); CHOI, Sangwon, Suwon-si Gyeonggi-do 16677 (KR)
(74) Representative: Gulde & Partner
(86) International application number: PCT/KR2025/000938
(87) International publication number: WO 2025/170234

(57) **Abstract**

The present disclosure relates to an apparatus and a method for eliminating interference from a receiver based on machine learning, which may: estimate a channel; estimate covariance by using the estimated channel; estimate a shrinkage coefficient by using a first neural network; estimate a target matrix by using a second neural network; and correct the covariance by using the shrinkage coefficient and the target matrix.

## Description

### BACKGROUND

### 1. Field

The following embodiments relate to technology for eliminating interference from a receiver based on machine learning.

### 2. Description of the Related Art

A multiple-input multiple-output (MIMO) system is a wireless communication system that transmits data using multiple transmitting and receiving antennas. In such a system, a receiver plays an important role, and a minimum mean square error (MMSE) receiver is widely used.

An MMSE receiver operates by minimizing the mean squared error of a received signal. Through this, the MMSE receiver plays a role in reducing interference between signals and improving the performance of the entire system.

However, in the case of a MIMO system, signal interference may occur due to various factors. One of these factors is multipath fading. Multipath fading is a phenomenon in which the strength of a signal changes in each path as the signal reaches a receiver through multiple paths, which may degrade the quality of a received signal and lead to a decrease in the performance of the entire MIMO system.

### SUMMARY

According to various embodiments of the present disclosure, an apparatus and a method for eliminating interference from a receiver based on machine learning are proposed.

According to embodiments, a method of reducing interference from a receiver includes estimating a channel, estimating covariance using the estimated channel, estimating a shrinkage coefficient using a first neural network, estimating a target matrix using a second neural network, and correcting the covariance using the shrinkage coefficient and the target matrix.

According to embodiments, an apparatus for reducing interference from a receiver includes a channel estimator configured to estimate a channel, a covariance estimator configured to estimate covariance using the estimated channel, a first neural network configured to estimate a shrinkage coefficient, a second neural network configured to estimate a target matrix, and a covariance corrector configured to correct the covariance using the shrinkage coefficient and the target matrix.

### BRIEF DESCRIPTION OF THE DRAWINGS

FIG. 1 is a diagram illustrating a configuration of an electronic device for eliminating interference from a receiver, according to an embodiment;
FIG. 2 is a diagram illustrating a configuration of an electronic device for training a neural network to eliminate interference, according to an embodiment;
FIG. 3 is a diagram illustrating a configuration of a shrinkage estimator, according to an embodiment;
FIG. 4 is a diagram illustrating a configuration of a target matrix estimator, according to an embodiment;
FIG. 5 is a flowchart illustrating a method of eliminating interference from a receiver, according to an embodiment;
FIG. 6 is a schematic diagram illustrating a configuration of an electronic device for eliminating interference from a receiver, according to an embodiment; and
FIG. 7 is a block diagram illustrating an electronic device in a network environment, according to an embodiment.

### DETAILED DESCRIPTION

Hereinafter, embodiments will be described in detail with reference to the accompanying drawings. However, various modifications may be made to the embodiments, and the scope of the disclosure is not limited or restricted by the embodiments. The embodiments should be understood to include all changes, equivalents, and replacements within the technical scope of the disclosure.

The terms used in the embodiments are for descriptive purposes only and should not be construed as limiting. The singular forms "a," "an," and "the" are intended to include the plural forms as well, unless the context clearly indicates otherwise. It will be further understood that the terms "comprises/comprising" or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms including technical and scientific terms used herein have the same meaning as commonly understood by one of ordinary skill in the art to which the embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related technology will be omitted when it is deemed that such description will cause ambiguous interpretation of the disclosure.

In addition, the terms first, second, A, B, (a), and (b) may be used to describe components of the embodiments. Each of these terms is not used to define an essence, order, or sequence of corresponding components, but used merely to distinguish the corresponding components from other components. When one component is described as being "connected," "coupled," or "attached" to another component, it should be understood that one component may be connected or attached directly to another component, and an intervening component may also be "connected," "coupled," or "attached" to the components.

Components included in an example and components that have common functions will be described using the same names in other embodiments. Unless stated otherwise, the description of any an embodiment may be applied to other embodiments, and the specific description of the repeated configuration will be omitted.

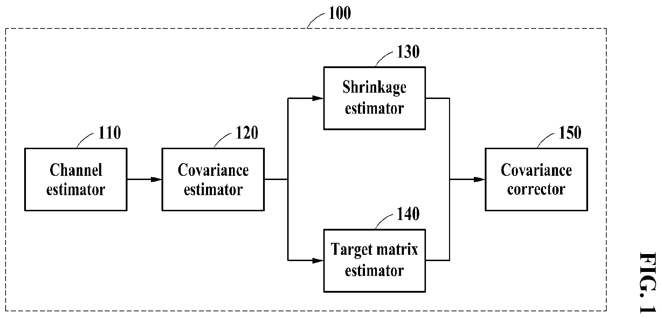

Hereinafter, according to an embodiment of the present disclosure, an apparatus and a method for eliminating interference from a receiver based on machine learning will be described in detail with reference to FIGS. 1 to 7.

FIG. 1 is a diagram illustrating a configuration of an electronic device for eliminating interference from a receiver, according to an embodiment.

Referring to FIG. 1, an electronic device 100 may include a channel estimator 110, a covariance estimator 120, a shrinkage estimator 130, a target matrix estimator 140, and a covariance corrector 150.

The channel estimator 110 may estimate a channel of a received signal.

The channel estimator 110 may obtain channel information by estimating the channel of the received signal.

Here, the channel information may include the number of receiving antennas, the number of samples, the number of transmitting layers, a Doppler frequency, and frequency selectivity. In addition, the channel information may further include at least one of a time offset, a frequency offset, a signal-to-noise ratio for each antenna measured by a demodulation reference signal (DMRS), noise for each antenna measured by the DMRS, and interference for each antenna measured by the DMRS.

The covariance estimator 120 may estimate covariance using the estimated channel.

A noise vector for calculating covariance associated with noise may be expressed as Equation 1 below. [Equation 1] $\hat{n} \left(k, rs\right) = y \left(k, rs\right) - \hat{H} \left(k, rs\right) X \left(k, rs\right)$

Here, n̂(*k, rs*) denotes a noise vector estimated from a k-th subcarrier in an rs-th DMRS symbol, y(*k, rs*) denotes a received signal corresponding to the k-th subcarrier and the rs-th DMRS symbol, Ĥ(*k, rs*) denotes an estimated channel, and X(*k, rs*) denotes a transmitted signal according to an MRS pattern.

The covariance estimator 120 may calculate, using the measured noise vector, noise covariance R*ₙₙ* in a resource block group (RBG) representing the region of a resource block (RB), as shown in Equation 2 below. [Equation 2] ${R}_{nn} = \frac{1}{{N}_{samp}} {\sum }_{k ∈ RBG} {R}_{nn}^{RE} \left(k\right) = \frac{1}{{N}_{samp}} {\sum }_{k ∈ RBG \left(i\right)} {\sum }_{rs} \hat{n} \left(k, rs\right) {\hat{n}}^{H} \left(k, rs\right)$

Here, R*ₙₙ* denotes the noise covariance, *Nₛₐₘₚ* denotes the number of resource elements (REs) in the RBG used to calculate R*ₙₙ,* ${R}_{nn}^{RE} \left(k\right)$ denotes n̂(*k, rs*)n̂*^{H}*(*k, rs*), and n̂(*k, rs*) denotes the noise vector estimated from the k-th subcarrier in the rs-th DMRS symbol.

In addition, the covariance estimator 120 may calculate, using the estimated covariance, a ratio of a trace norm of covariance to a Frobenius norm of the covariance, as shown in Equation 3 below, and calculate, using the ratio, *W_{f}* capable of expressing the form of the covariance, as shown in Equation 3 below. [Equation 3] $\begin{matrix}traceRnn = tr {\left({R}_{nn}\left(i\right)\right)}^{2} \\ FrobRnn = {\left‖{R}_{nn}\left(i+1\right)\right‖}_{F}^{2}\end{matrix}$

Here, traceRnn denotes the trace norm of the covariance, and FrobRnn denotes the Frobenius norm of the covariance. [Equation 4] ${W}_{f} = \frac{FrobRnn}{traceRnn}$

Here, *W_{f}* denotes the ratio of the trace norm of the covariance to the Frobenius norm of the covariance.

In addition, the covariance estimator 120 may calculate a ratio of the maximum value to the minimum value of the diagonal entries of the covariance, as shown in Equation 5 below. [Equation 5] $ψ = \frac{{min}_{j} \left({R}_{nn}\left[j, j\right]\right)}{{max}_{i} \left({R}_{nn}\left[i, i\right]\right)}$

Here, *ψ* denotes the ratio of the maximum value to the minimum value of the diagonal entries of the covariance, ${min}_{j} \left({R}_{nn}\left[j, j\right]\right)$ denotes the minimum value of the diagonal entry of the covariance, and ${max}_{i} \left({R}_{nn}\left[i, i\right]\right)$ denotes the maximum value of the diagonal entry of the covariance.

The shrinkage estimator 130 may estimate a shrinkage coefficient using a first neural network.

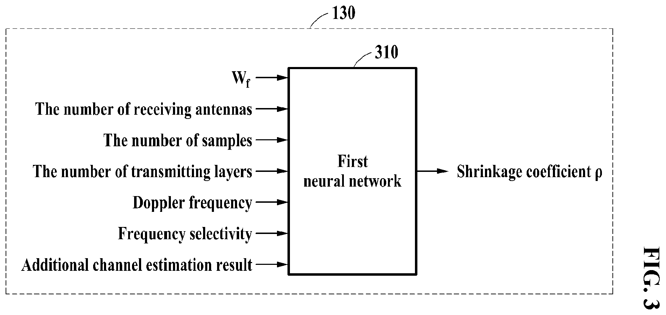

FIG. 3 is a diagram illustrating a configuration of a shrinkage estimator, according to an embodiment.

Referring to FIG. 3, the shrinkage estimator 130 may include a first neural network 310.

The first neural network 310 may estimate a shrinkage coefficient by receiving a ratio of a trace norm of covariance to a Frobenius norm of the covariance, the number of receiving antennas, the number of samples, the number of transmitting layers, a Doppler frequency, and frequency selectivity.

The first neural network 310 may estimate the shrinkage coefficient by further receiving an additional channel estimation result when estimating the shrinkage coefficient.

Here, the additional channel estimation result may include at least one of a time offset, a frequency offset, a signal-to-noise ratio for each antenna measured by a DMRS, noise for each antenna measured by the DMRS, and interference for each antenna measured by the DMRS.

Referring back to the description of FIG. 1, the target matrix estimator 140 may estimate a target matrix using a second neural network.

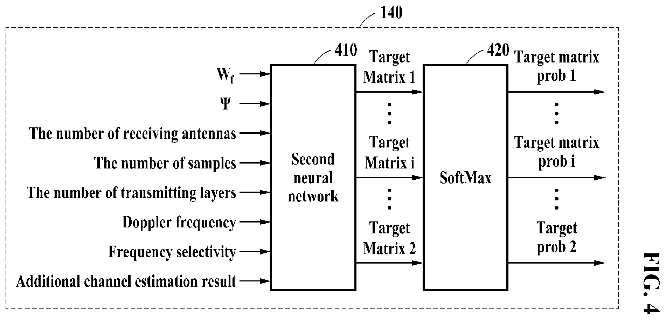

FIG. 4 is a diagram illustrating a configuration of a target matrix estimator, according to an embodiment.

Referring to FIG. 4, the target matrix estimator 140 may include a second neural network 410 and SoftMax 420.

The second neural network 410 may estimate a plurality of target matrix values by receiving a ratio of a trace norm of covariance to a Frobenius norm of the covariance, a ratio of the maximum value to the minimum value of the diagonal entries of the covariance, the number of receiving antennas, the number of samples, the number of transmitting layers, a Doppler frequency, and frequency selectivity.

The second neural network 410 may be used to estimate a plurality of target matrices by further receiving an additional channel estimation result when estimating the target matrices.

Here, the additional channel estimation result may include at least one of a time offset, a frequency offset, a signal-to-noise ratio for each antenna measured by a DMRS, noise for each antenna measured by the DMRS, and interference for each antenna measured by the DMRS.

The SoftMax 420 may perform SoftMax on the plurality of target matrix values output from the second neural network 410 to output probability values of the plurality of target matrices.

The target matrix estimator 140 may select a target matrix with the highest probability using the probability values of the plurality of target matrices output from the SoftMax 420.

Here, the first neural network 310 of FIG. 3 and the second neural network 410 of FIG. 4 may be generated through supervised machine learning and may include a multilayer perceptron (MLP).

Referring back to the description of FIG. 1, the covariance corrector 150 may correct the covariance using the shrinkage coefficient and the target matrix.

The covariance corrector 150
may perform covariance correction on the noise covariance estimated in Equation 2 described above in the form of a linear shrinkage estimator, as shown in Equation 6 below. [Equation 6] ${D}_{nn} = \left(1-ρ\right) {R}_{nn} + ρ F$

Here, D*ₙₙ* denotes the corrected noise covariance, R*ₙₙ* denotes the estimated noise covariance, *ρ* denotes the shrinkage coefficient, and F denotes the target matrix.

Here, *ρ* may be estimated through the shrinkage estimator 130, and F may be estimated through the target matrix estimator 140.

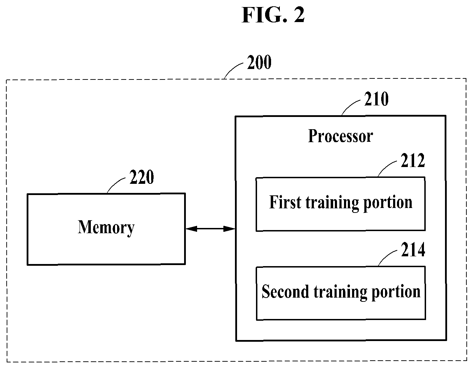

FIG. 2 is a diagram illustrating a configuration of an electronic device for training a neural network to eliminate interference, according to an embodiment.

Referring to FIG. 2, an electronic device 200 may include a processor 210 and memory 220.

The memory 220 the memory 200 may store an operating system (OS), an application, and storage data for controlling the overall operation of the electronic device 200. The memory 220 may store various instructions executable by a processor 1620.

The processor 210 may include a first training portion 212 and a second training portion 214.

The processor 210 may generate an optimal shrinkage coefficient *ρ = ρ^{opt}* and an optimal target matrix F = F*^{opt}* in advance for training through the first training portion 212 and the second training portion 214. Here, the processor 210 may serve as a simulator.

A method of generating training data may calculate, when a shrinkage coefficient *ρ* and a target matrix F are given in the processor 210, *ρ* and F that minimize a result of the minimum mean squared error (MMSE) x̂(ρ, F) = Ĥ*^{H}*(ĤĤ*^{H}* + D*ₙₙ*(*ρ,* F))⁻¹y and the mean squared error (MSE) of an actual transmitted data signal *xₜₓ* generated by the processor 210, which is Equation 7. One of the candidates may be determined to be F, and embodiments of the candidates may be ${F}_{1} = \frac{tr \left({R}_{nn}\right)}{{N}_{rx}} I$ and F₂ = Diag(*R*ₙₙ(*i*)). [Equation 7] $\left(ρ, F\right) = {min}_{\left(ρ, F\right)} {\sum }_{RE ∈ RBG} {\left‖\hat{X}\left(ρ, F\right)-{x}_{tx}\right‖}^{2}$

Here, *RE_{data}* denotes the number of data resources included in an RBG, which is used during an R*ₙₙ* operation in Equation 2, x̂(*ρ*, F) denotes a result of an MMSE equalizer obtained by using the shrinkage coefficient and the target matrix F, which are estimated using a neural network, and x*ₜₓ* denotes a signal from a transmitting end corresponding to the ground truth. This signal may be obtained through simulation.

The first training portion 212 may generate the first neural network by training the first neural network using a loss function of a weighted mean squared error such that a difference between a shrinkage coefficient for training included in training data and a shrinkage exponent of a training result is minimized.

The training data used in the first training portion 212 may include a ratio of a trace norm of covariance for training to a Frobenius norm of the covariance for training, the number of receiving antennas for training, the number of samples for training, the number of transmitting layers for training, a Doppler frequency for training, frequency selectivity for training, and the shrinkage coefficient for training.

The training data used in the first training portion 212 may further include at least one of a time offset for training, a frequency offset for training, a signal-to-noise ratio for each antenna for training, noise for each antenna for training, and interference for each antenna for training.

The first training portion 212 may use a weighted mean squared error as a loss function to train the first neural network 310, which may be expressed as Equation 8 below. [Equation 8] $MSE = {\sum }_{k = 0}^{{N}_{t}} {w}_{k} {\left‖{ρ}_{k}-{ρ}_{k}^{opt}\right‖}^{2}$

Here, *ρ*^{opt} denotes an optimal shrinkage coefficient derived from a simulator, and *wₖ* denotes a weight, which may be set to a higher value for cases in which the performance varies significantly according to changes in *ρ. Nₜ* denotes the number of pieces of training data during training and denotes the number of pieces of test data during performance evaluation.

The second training portion 214 may generate the second neural network by training the second neural network using an optimal target matrix for training included in training data and an optimal target matrix according to a training result as inputs of a loss function of weighted cross-entropy such that a target matrix with the highest probability is selected from among the preset target matrices.

The training data used in the second training portion 214 may include a ratio of a trace norm of covariance for training to a Frobenius norm of the covariance for training, a ratio of the maximum value to the minimum value of the diagonal entries of the covariance for training, the number of receiving antennas for training, the number of samples for training, the number of transmitting layers for training, a Doppler frequency for training, frequency selectivity for training, and the optimal target matrix for training.

The training data used in the second training portion 214 may further include at least one of a time offset for training, a frequency offset for training, a signal-to-noise ratio for each antenna for training, noise for each antenna for training, and interference for each antenna for training.

The second training portion 214 may use weighted cross-entropy as a loss function to train the second neural network 410, which may be expressed as Equation 9 below. [Equation 9] $CE = {\sum }_{k = 0}^{{N}_{t}} - {w}_{k} {q}_{k} \left(i\right) {logp}_{k} \left(i\right)$

Here, *pₖ*(*i*) denotes a probability of an *i*-th target matrix of *k*-th training data, and *wₖ* denotes a weight. *qₖ*(*i*) denotes an indicator of the *i*-th matrix of the *k*-th training data, and ${q}_{k} \left(i\right) = \left\{\begin{matrix}1 , & if i = n \\ 0 , & otherwise\end{matrix}\right.$ when an *i* = *n*-th target matrix is optimal in the training data.

The second training portion 214 may select the target matrix with the highest probability among the target matrices when estimating the optimal target matrix using the trained result.

Furthermore, although the electronic devices are illustrated as separate electronic devices in FIGS. 1 and 2, the electronic devices may be implemented as a single electronic device.

Hereinafter, a method according to the present disclosure configured as described above will be described with reference to the diagrams.

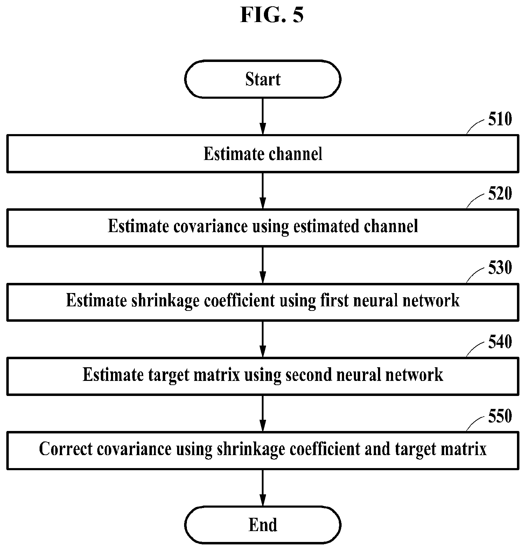

FIG. 5 is a flowchart illustrating a method of eliminating interference from a receiver, according to an embodiment.

Referring to FIG. 5, in operation 510, according to an embodiment, an electronic device (e.g., the electronic device 100 of FIG. 1) may estimate a channel. In operation 510, the electronic device may obtain channel information by estimating the channel of a received signal. Here, the channel information may include the number of receiving antennas, the number of samples, the number of transmitting layers, a Doppler frequency, and frequency selectivity. In addition, the channel information may further include at least one of a time offset, a frequency offset, a signal-to-noise ratio for each antenna measured by a DMRS, noise for each antenna measured by the DMRS, and interference for each antenna measured by the DMRS.

In operation 520, the electronic device may estimate covariance using the estimated channel.

In operation 530, the electronic device may estimate a shrinkage coefficient using a first neural network (e.g., the first neural network 310 of FIG. 3).

In operation 530, the electronic device may estimate the shrinkage coefficient by inputting, to the first neural network, a ratio of a trace norm of covariance to a Frobenius norm of the covariance, the number of receiving antennas, the number of samples, the number of transmitting layers, a Doppler frequency, and frequency selectivity.

In operation 530, the electronic device may further include, as an input of the first neural network, at least one of a time offset, a frequency offset, a signal-to-noise ratio for each antenna measured by a DMRS, noise for each antenna measured by the DMRS, and interference for each antenna measured by the DMRS.

In operation 540, the electronic device may estimate a target matrix using a second neural network (e.g., the second neural network 410 of FIG. 4).

In operation 540, the electronic device may estimate the target matrix by inputting, to the second neural network, a ratio of a trace norm of covariance to a Frobenius norm of the covariance, a ratio of the maximum value to the minimum value of the diagonal entries of the covariance, the number of receiving antennas, the number of samples, the number of transmitting layers, a Doppler frequency, and frequency selectivity.

In operation 540, the electronic device may further include, as an input of the second neural network, at least one of a time offset, a frequency offset, a signal-to-noise ratio for each antenna measured by a DMRS, noise for each antenna measured by the DMRS, and interference for each antenna measured by the DMRS.

In operation 550, the electronic device may correct the covariance using the shrinkage coefficient and the target matrix.

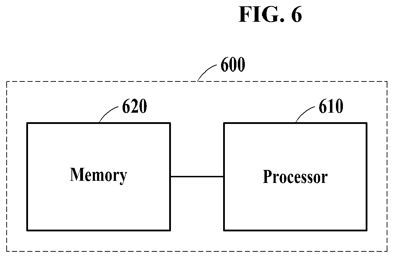

FIG. 6 is a schematic diagram illustrating a configuration of an electronic device for eliminating interference from a receiver, according to an embodiment.

Referring to FIG. 6, memory 620 may store an OS, an application program, and storage data for controlling the overall operation of an electronic device 600. The memory 620 may store various instructions executable by a processor 610.

The processor 610 may perform the operations of the channel estimator 110, the covariance estimator 120, the shrinkage estimator 130, the target matrix estimator 140, and the covariance corrector 150 of the electronic device 100 of FIG. 1. That is, the processor 610 may include the configurations of the channel estimator 110, the covariance estimator 120, the shrinkage estimator 130, the target matrix estimator 140, and the covariance corrector 150 of FIG. 1.

In addition, the processor 610 may perform the operation of the processor 210 of the electronic device 200 of FIG. 2. That is, the processor 610 may include the configuration of the processor 210 of FIG. 2.

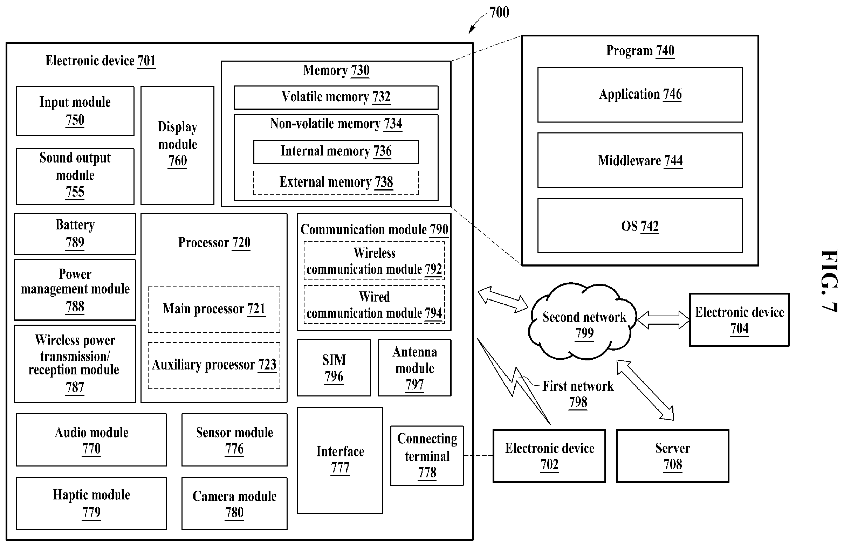

FIG. 7 is a block diagram illustrating an electronic device in a network environment, according to an embodiment.

Referring to FIG. 7, an electronic device 701 in a network environment 700 may communicate with an electronic device 702 via a first network 798 (e.g., a short-range wireless communication network), or at least one of an electronic device 704 or a server 708 via a second network 799 (e.g., a long-range wireless communication network). According to an embodiment, the electronic device 701 may communicate with the electronic device 704 via the server 708. According to an embodiment, the electronic device 701 may include a processor 720, memory 730, an input module 750, a sound output module 755, a display module 760, an audio module 770, a sensor module 776, an interface 777, a connecting terminal 778, a haptic module 779, a camera module 780, a power management module 788, a battery 789, a communication module 790, a subscriber identification module (SIM) 796, or an antenna module 797. In some embodiments, at least one of the components (e.g., the connecting terminal 778) may be omitted from the electronic device 701, or one or more other components may be added to the electronic device 701. In some embodiments, some of the components (e.g., the sensor module 776, the camera module 780, or the antenna module 797) may be implemented as a single component (e.g., the display module 760).

The processor 720 may execute, for example, software (e.g., a program 740) to control at least one other component (e.g., a hardware or software component) of the electronic device 701 coupled with the processor 720, and may perform various data processing or computation. According to an embodiment, as at least part of the data processing or computation, the processor 720 may store a command or data received from another component (e.g., the sensor module 776 or the communication module 790) in volatile memory 732, process the command or the data stored in the volatile memory 732, and store resulting data in non-volatile memory 734.

Furthermore, the processor 720 may perform the operations of the channel estimator 110, the covariance estimator 120, the shrinkage estimator 130, the target matrix estimator 140, and the covariance corrector 150 of FIG. 1.

In addition, the processor 720 may perform the operation of the processor 210 of FIG. 2. Additionally, the processor 720 may perform the operation of the processor 610 of FIG. 6.

According to an embodiment, the processor 720 may include a main processor 721 (e.g., a central processing unit (CPU) or an application processor (AP)), or an auxiliary processor 723 (e.g., a graphics processing unit (GPU), a neural processing unit (NPU), an image signal processor (ISP), a sensor hub processor, or a communication processor (CP)) that is operable independently from, or in conjunction with, the main processor 721. For example, when the electronic device 701 includes the main processor 721 and the auxiliary processor 723, the auxiliary processor 723 may be adapted to consume less power than the main processor 721, or to be specific to a specified function. The auxiliary processor 723 may be implemented as separate from, or as part of the main processor 721.

The auxiliary processor 723 may control at least some of functions or states related to at least one component (e.g., the display module 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). According to an embodiment, the auxiliary processor 723 (e.g., an ISP or a CP) may be implemented as part of another component (e.g., the camera module 780 or the communication module 790) functionally related to the auxiliary processor 723. According to an embodiment, the auxiliary processor 723 (e.g., the neural processing unit) may include a hardware structure specified for artificial intelligence model processing. An artificial intelligence model may be generated by machine learning. Such learning may be performed, e.g., by the electronic device 701 where the artificial intelligence is performed or via a separate server (e.g., the server 708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734.

Furthermore, the memory 730 may serve as the memory 220 of FIG. 2 or the memory 620 of FIG. 6.

The program 740 may be stored in the memory 730 as software, and may include, for example, an OS 742, middleware 744, or an application 746.

The input module 750 may receive a command or data to be used by another component (e.g., the processor 720) of the electronic device 701, from the outside (e.g., a user) of the electronic device 701. The input module 750 may include, for example, a microphone, a mouse, a keyboard, a key (e.g., a button), or a digital pen (e.g., a stylus pen).

The sound output module 755 may output sound signals to the outside of the electronic device 701. The sound output module 755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 760 may visually provide information to the outside (e.g., a user) of the electronic device 701. The display module 760 may include, for example, a display, a hologram device, or a projector and control circuitry to control a corresponding one of the display, hologram device, and projector. According to an embodiment, the display module 760 may include a touch sensor adapted to detect a touch, or a pressure sensor adapted to measure the intensity of force incurred by the touch. Here, the display module 760 may serve as a touch screen 70 of FIG. 1.

The audio module 770 may convert a sound into an electrical signal and vice versa. According to an embodiment, the audio module 770 may obtain the sound via the input module 750 or output the sound via the sound output module 755 or an external electronic device (e.g., the electronic device 702) (e.g., a speaker or headphone) directly or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. According to an embodiment, the sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device (e.g., the electronic device 702) directly (e.g., wiredly) or wirelessly. According to an embodiment, the interface 777 may include, for example, a high definition multimedia interface (HDMI), a universal serial bus (USB) interface, a secure digital (SD) card interface, or an audio interface.

The connecting terminal 778 may include a connector via which the electronic device 701 may be physically connected with the external electronic device (e.g., the electronic device 702). According to an embodiment, the connecting terminal 778 may include, for example, an HDMI connector, a USB connector, an SD card connector, or an audio connector (e.g., a headphone connector).

The haptic module 779 may convert an electrical signal into a mechanical stimulus (e.g., a vibration or a movement) or electrical stimulus which may be recognized by a user via his tactile sensation or kinesthetic sensation. According to an embodiment, the haptic module 779 may include, for example, a motor, a piezoelectric element, or an electric stimulator.

The camera module 780 may capture a still image or moving images. According to an embodiment, the camera module 780 may include one or more lenses, image sensors, ISPs, or flashes.

The power management module 788 may manage power supplied to the electronic device 701. According to an embodiment, the power management module 788 may be implemented as at least part of, for example, a power management integrated circuit (PMIC).

The battery 789 may supply power to at least one component of the electronic device 701. According to an embodiment, the battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more CPs that are operable independently from the processor 720 (e.g., the AP) and support a direct (e.g., wired) communication or a wireless communication. According to an embodiment, the communication module 790 may include a wireless communication module 792 (e.g., a cellular communication module, a short-range wireless communication module, or a global navigation satellite system (GNSS) communication module) or a wired communication module 794 (e.g., a local area network (LAN) communication module or a power line communication (PLC) module). A corresponding one of these communication modules may communicate with the external electronic device 704 via the first network 798 (e.g., a short-range communication network, such as Bluetooth^{™}, wireless-fidelity (Wi-Fi) direct, or infrared data association (IrDA)) or the second network 799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 792 may identify and authenticate the electronic device 701 in a communication network, such as the first network 798 or the second network 799, using subscriber information (e.g., international mobile subscriber identity (IMSI)) stored in the SIM 796. The communication module 790 may serve as a communicator 120 of FIG. 1.

The wireless communication module 792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 792 may support a high-frequency band (e.g., the mmWave band) to achieve, e.g., a high data transmission rate. The wireless communication module 792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 792 may support various requirements specified in the electronic device 701, an external electronic device (e.g., the electronic device 704), or a network system (e.g., the second network 799). According to an embodiment, the wireless communication module 792 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 797 may transmit or receive a signal or power to or from the outside (e.g., the external electronic device) of the electronic device 701. According to an embodiment, the antenna module 797 may include an antenna including a radiating element composed of a conductive material or a conductive pattern formed in or on a substrate (e.g., a printed circuit board (PCB)). According to an embodiment, the antenna module 797 may include a plurality of antennas (e.g., array antennas). In such a case, at least one antenna appropriate for a communication scheme used in the communication network, such as the first network 798 or the second network 799, may be selected, for example, by the communication module 790 from the plurality of antennas. The signal or the power may then be transmitted or received between the communication module 790 and the external electronic device via the selected at least one antenna. According to an embodiment, another component (e.g., a radio frequency integrated circuit (RFIC)) other than the radiating element may be additionally formed as part of the antenna module 797.

According to various embodiments, the antenna module 797 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 701 and the external electronic device 704 via the server 708 coupled with the second network 799. Each of the external electronic devices 702 or 1304 may be a device of a same type as, or a different type, from the electronic device 701. According to an embodiment, all or some of operations to be executed at the electronic device 701 may be executed at one or more of the external electronic devices 702, 1304, or 1308. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 701. The electronic device 701 may provide the outcome, with or without further processing of the outcome, as at least part of a reply to the request. To that end, cloud computing, distributed computing, mobile edge computing (MEC), or client-server computing technology may be used, for example. The electronic device 701 may provide ultra low-latency services using, e.g., distributed computing or mobile edge computing. In another embodiment, the external electronic device 704 may include an Internet-of-Things (IoT) device. The server 708 may be an intelligent server using machine learning and/or a neural network. According to an embodiment, the external electronic device 704 or the server 708 may be included in the second network 799. The electronic device 701 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 740) including one or more instructions that are stored in a storage medium (e.g., internal memory 736 or external memory 738) that is readable by a machine (e.g., the electronic device 701). For example, a processor (e.g., the processor 720) of the machine (e.g., the electronic device 701) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a complier or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, a method of reducing interference from a receiver may include estimating a channel, estimating covariance using the estimated channel, estimating a shrinkage coefficient using the first neural network 310, estimating a target matrix using the second neural network 410, and correcting the covariance using the shrinkage coefficient and the target matrix.

According to an embodiment, the estimating of the shrinkage coefficient may include estimating the shrinkage coefficient by inputting, to the first neural network 310, a ratio of a trace norm of the covariance to a Frobenius norm of the covariance, the number of receiving antennas, the number of samples, the number of transmitting layers, a Doppler frequency, and frequency selectivity.

According to an embodiment, the estimating of the shrinkage coefficient may further include, as an input of the first neural network 310, at least one of a time offset, a frequency offset, a signal-to-noise ratio for each antenna measured by a DMRS, noise for the each antenna measured by the DMRS, and interference for the each antenna measured by the DMRS.

According to an embodiment, the estimating of the target matrix may include estimating the target matrix by inputting, to the second neural network 410, a ratio of a trace norm of the covariance to a Frobenius norm of the covariance, a ratio of the maximum value to the minimum value of diagonal entries of the covariance, the number of receiving antennas, the number of samples, the number of transmitting layers, a Doppler frequency, and frequency selectivity.

According to an embodiment, the estimating of the target matrix may further include, as an input of the second neural network 410, at least one of a time offset, a frequency offset, a signal-to-noise ratio for each antenna measured by a DMRS, noise for the each antenna measured by the DMRS, and interference for the each antenna measured by the DMRS.

According to an embodiment, the first neural network 310 and the second neural network 410 may be generated through supervised machine learning.

According to an embodiment, the first neural network 310 and the second neural network 410 may include an MLP.

According to an embodiment, the method may further include generating the first neural network 310 by training the first neural network using a loss function of a weighted mean squared error such that a difference between a shrinkage coefficient for training included in training data and a shrinkage exponent of a training result is minimized.

According to an embodiment, the training data may include a ratio of a trace norm of covariance for training to a Frobenius norm of the covariance for training, the number of receiving antennas for training, the number of samples for training, the number of transmitting layers for training, a Doppler frequency for training, frequency selectivity for training, and the shrinkage coefficient for training.

According to an embodiment, the training data may further include at least one of a time offset for training, a frequency offset for training, a signal-to-noise ratio for each antenna for training, noise for each antenna for training, and interference for the each antenna for training.

According to an embodiment, the method may further include generating the second neural network 410 by training the second neural network using an optimal target matrix for training included in training data and an optimal target matrix according to a training result as inputs of a loss function of weighted cross-entropy such that a target matrix with the highest probability is selected from among preset target matrices.

According to an embodiment, the training data may include a ratio of a trace norm of covariance for training to a Frobenius norm of the covariance for training, a ratio of the maximum value to the minimum value of diagonal entries of the covariance for training, the number of receiving antennas for training, the number of samples for training, the number of transmitting layers for training, a Doppler frequency for training, frequency selectivity for training, and the optimal target matrix for training.

According to an embodiment, the training data may further include at least one of a time offset for training, a frequency offset for training, a signal-to-noise ratio for each antenna for training, noise for each antenna for training, and interference for the each antenna for training.

According to an embodiment, an apparatus for reducing interference from a receiver may include the channel estimator 110 configured to estimate a channel, the covariance estimator 120 configured to estimate covariance using the estimated channel, the first neural network 310 configured to estimate a shrinkage coefficient, the second neural network 410 configured to estimate a target matrix, and the covariance corrector 150 configured to correct the covariance using the shrinkage coefficient and the target matrix.

According to an embodiment, the first neural network 310 may be configured to estimate the shrinkage coefficient by inputting, to the first neural network, a ratio of a trace norm of the covariance to a Frobenius norm of the covariance, the number of receiving antennas, the number of samples, the number of transmitting layers, a Doppler frequency, and frequency selectivity.

According to an embodiment, when estimating the shrinkage coefficient, the first neural network 310 may further include, as an input of the first neural network, at least one of a time offset, a frequency offset, a signal-to-noise ratio for each antenna measured by a DMRS, noise for the each antenna measured by the DMRS, and interference for the each antenna measured by the DMRS.

According to an embodiment, the second neural network 410 may be configured to estimate the target matrix by inputting, to the second neural network, a ratio of a trace norm of the covariance to a Frobenius norm of the covariance, a ratio of the maximum value to the minimum value of diagonal entries of the covariance, the number of receiving antennas, the number of samples, the number of transmitting layers, a Doppler frequency, and frequency selectivity.

According to an embodiment, when estimating the target matrix, the second neural network 410 may further include, as an input of the second neural network, at least one of a time offset, a frequency offset, a signal-to-noise ratio for each antenna measured by a DMRS, noise for the each antenna measured by the DMRS, and interference for the each antenna measured by the DMRS.

According to an embodiment, the first neural network 310 and the second neural network 410 may be generated through supervised machine learning and may include an MLP.

The method according to the embodiments described above may be recorded in the non-transitory computer-readable storage media including program instructions to implement various operations of the embodiments described above. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs and digital video discs (DVDs); magneto-optical media such as optical discs; and hardware devices that are specially configured to store and perform program instructions, such as ROM, RAM, flash memory, and the like. Examples of program instructions include both machine code, such as code produced by a compiler, and files containing higher level code that may be executed by the computer using an interpreter. The hardware devices described above may be configured to act as one or more software modules in order to perform the operations of the embodiments, or vice versa.

Software may include a computer program, a piece of code, an instruction, or one or more combinations thereof, to independently or collectively instruct or configure a processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored on one or more computer-readable storage media.

Although the embodiments have been described with reference to the limited drawings, one of ordinary skill in the art may apply various technical modifications and variations based thereon. For example, appropriate results may be achieved if the described techniques are performed in a different order, and/or if components in a described system, structure, device, or circuit are combined in a different manner, and/or replaced or substituted by other components or their equivalents.

Therefore, other implementations, other embodiments, and equivalents to the claims are also within the scope of the following claims.

## Claims

1. A method of reducing interference from a receiver, the method comprising:
estimating a channel;
estimating covariance using the estimated channel;
estimating a shrinkage coefficient using a first neural network;
estimating a target matrix using a second neural network; and
correcting the covariance using the shrinkage coefficient and the target matrix.

2. The method of claim 1, wherein the estimating of the shrinkage coefficient comprises estimating the shrinkage coefficient by inputting, to the first neural network, a ratio of a trace norm of the covariance to a Frobenius norm of the covariance, a number of receiving antennas, a number of samples, a number of transmitting layers, a Doppler frequency, and frequency selectivity.

3. The method of one of claims 1 and 2, wherein the estimating of the shrinkage coefficient further comprises, as an input of the first neural network, at least one of a time offset, a frequency offset, a signal-to-noise ratio for each antenna measured by a demodulation reference signal (DMRS), noise for the each antenna measured by the DMRS, and interference for the each antenna measured by the DMRS.

4. The method of one of claims 1 to 3, wherein the estimating of the target matrix comprises estimating the target matrix by inputting, to the second neural network, a ratio of a trace norm of the covariance to a Frobenius norm of the covariance, a ratio of a maximum value to a minimum value of diagonal entries of the covariance, a number of receiving antennas, a number of samples, a number of transmitting layers, a Doppler frequency, and frequency selectivity.

5. The method of one of claims 1 to 4, wherein the estimating of the target matrix further comprises, as an input of the second neural network, at least one of a time offset, a frequency offset, a signal-to-noise ratio for each antenna measured by a demodulation reference signal (DMRS), noise for the each antenna measured by the DMRS, and interference for the each antenna measured by the DMRS.

6. The method of one of claims 1 to 5, wherein the first neural network and the second neural network are generated through supervised machine learning.

7. The method of one of claims 1 to 6, wherein the first neural network and the second neural network comprise a multilayer perceptron (MLP).

8. The method of one of claims 1 to 7, further comprising:
generating the first neural network by training the first neural network using a loss function of a weighted mean squared error such that a difference between a shrinkage coefficient for training comprised in training data and a shrinkage exponent of a training result is minimized.

9. The method of one of claims 1 to 8, wherein the training data comprises a ratio of a trace norm of covariance for training to a Frobenius norm of the covariance for training, a number of receiving antennas for training, a number of samples for training, a number of transmitting layers for training, a Doppler frequency for training, frequency selectivity for training, and the shrinkage coefficient for training.

10. The method of one of claims 1 to 9, wherein the training data further comprises at least one of a time offset for training, a frequency offset for training, a signal-to-noise ratio for each antenna for training, noise for each antenna for training, and interference for the each antenna for training.

11. The method of one of claims 1 to 10, further comprising:
generating the second neural network by training the second neural network using an optimal target matrix for training comprised in training data and an optimal target matrix according to a training result as inputs of a loss function of weighted cross-entropy such that a target matrix with a highest probability is selected from among preset target matrices.

12. The method of one of claims 1 to 11, wherein the training data comprises a ratio of a trace norm of covariance for training to a Frobenius norm of the covariance for training, a ratio of a maximum value to a minimum value of diagonal entries of the covariance for training, a number of receiving antennas for training, a number of samples for training, a number of transmitting layers for training, a Doppler frequency for training, frequency selectivity for training, and the optimal target matrix for training.

13. The method of one of claims 1 to 12, wherein the training data further comprises at least one of a time offset for training, a frequency offset for training, a signal-to-noise ratio for each antenna for training, noise for each antenna for training, and interference for the each antenna for training.

14. An apparatus for reducing interference from a receiver, the apparatus comprising:
a channel estimator configured to estimate a channel;
a covariance estimator configured to estimate covariance using the estimated channel;
a first neural network configured to estimate a shrinkage coefficient;
a second neural network configured to estimate a target matrix; and
a covariance corrector configured to correct the covariance using the shrinkage coefficient and the target matrix.

15. The apparatus of claim 14, wherein the first neural network is configured to estimate the shrinkage coefficient by inputting, to the first neural network, a ratio of a trace norm of the covariance to a Frobenius norm of the covariance, a number of receiving antennas, a number of samples, a number of transmitting layers, a Doppler frequency, and frequency selectivity.
